# EUROPEAN PATENT SPECIFICATION

(11) **EP 0 886 890 B1**
(45) Date of publication and mention of the grant of the patent: **27.06.2001**
(21) Application number: 97921083.8
(22) Date of filing: 06.03.1997
(51) Int. Cl.: H01R 4/24, H01R 9/24

(54) **POWER TAP NETWORK CONNECTOR**
DURCHGANGSSTECKVERBINDER FÜR EIN ELEKTRISCHES NETZWERK
CONNECTEUR DE RESEAU POUR PRISE DE COURANT

(30) Priority: 12.03.1996 US 615572
(43) Date of publication of application: 30.12.1998
(73) Proprietor: THE WHITAKER CORPORATION, Wilmington, Delaware 19808 (US)
(72) Inventor: CAPPER, Harry, Milton, Harrisburg, PA 17112 (US); DENOVICH, Sam, Harrisburg, PA 17109 (US); GARVER, William, Joseph, Harrisburg, PA 17112 (US)
(74) Representative: Warren, Keith Stanley
(86) International application number: US9705281
(87) International publication number: WO9734338

(56) References cited:
- EP-A- 0 195 879
- EP-A- 0 427 132
- DE-A- 3 333 973
- US-A- 4 684 195
- PATENT ABSTRACTS OF JAPAN vol. 96, no. 5, 31 May 1996 & JP 08 007945 A (OKI DENSEN KK), 12 January 1996,

## Description

The present invention relates to a simplified concept for terminating signal conductors to a network interface device. Network interface devices as known in the art, provide limited access by a subscriber or customer for testing by the subscriber of the subscriber premises wiring, at a telephone junction box for example, where the subscriber premises wiring is connected to circuits of the telephone service provider. Such junction boxes are also fully accessible to service personnel of the telephone company after installation. One such network interface device is disclosed in U.S. Patent No. 4,979,209 for a plurality of subscribers, wherein an enclosure includes a primary lid extending over the entire enclosure and securable by service personnel, and a secondary lid over the subscriber-accessible portion of the enclosure securable by the subscribers; such enclosures commonly provide access to the subscriber-accessible portion by service personnel but the subscriber-accessible portion remains secured against unauthorized person. Individual modules within the subscriber-accessible portion are disclosed to include individual security covers such that each subscriber module is secured against access by the other subscribers.

In U.S. Patent No. 5,420,920 there is disclosed a subscriber module having a test port or jack in which pairs of contacts are interconnected by a dedicated plug inserted thereinto to complete circuits between the telephone cable and the premises wiring for regular in-service use. When the dedicated plug is removed during an investigation of a fault, another plug joined to a telephone unit is insertable by the subscriber to again complete the circuits to determine the presence or absence of a fault in the telephone company wiring. The dedicated plug of the module is adapted to seal the jack cavity when in position, protecting the contacts exposed in the jack, and is joined to the module by a lanyard when removed from the jack. Conductors of the premise wiring are easily terminatable by insulation displacement techniques to terminals using a stuffer cap, with the terminals connected to first contacts of the jack contact pairs by circuit board traces, while second contacts of the pairs are connected by other board traces to conductors connected to the distribution cable.

JP-A-08 007945 discloses a wire termination arrangement for a connector module with a wire receiving passageway extending to a wall of the housing to limit insertion of a wire thereinto prior to termination. In US-A-4 684 195 is disclosed a connector with a wire carrier pivotally attached to a center portion of the housing such that a conductor may be inserted through one end of a passageway disposed in the carrier, to be terminated to an IDC terminal provided in the base of the housing upon pivoting the wire carrier; the distal end of the wire will be seated within the housing adjacent the pivot point of the carrier.

A problem exists in that a simplified wire termination is needed. Additionally, it is desirable to be able to seal such a simplified termination.

From one aspect, the present invention consists in a wire termination arrangement for a connector module having terminals secured within a module housing, comprising at least one wire carrier having at least one wire-receiving passageway extending thereinto from an exposed front face, a rearward end including a pivot section adapted to cooperate with a complementary pivot section of said module housing to move said wire carrier from a first or wire insertion position to a second or wire termination position, and at least one slot extending into a housing-adjacent face to receive a wire insulation displacement terminal, said slot intersecting said wire-receiving passageway, characterized in that:
said wire-receiving passageway defines a continuous open passageway between opposite faces and an outer periphery of said housing in the second or wire termination position,
whereby with a distal end of a conductor of a premise wire inserted along a respective said wire-receiving passageway and being selectively extendable outwardly past said rear face and said module housing, said wire carrier is movable from said first wire-termination slot of said insulation displacement terminal thus terminating said conductor.

From another aspect, the invention consists in a power tap connector for terminating a pair of conductors by insulation displacement, the connector including a housing for receiving at least a pair of upstanding IDC terminals, and a pivotally mounted wire carrier arranged on said housing and having front and rear faces, a conductor receiving opening for each IDC terminal, and an IDC terminal receiving slot in communication with each opening, said wire carrier being pivotal from a first or conductor unterminated position to a second or conductor terminated position, characterized in that:
the conductor receiving openings extend from the front face to the rear face of the wire carrier and define continuous open passageways between the front and rear faces and an outer periphery of the housing in the second or conductor terminated position,
whereby an insulated conductor may be positioned for termination to a corresponding IDC terminal within the opening by entry thereinto through either said front face or said rear face for selectively extending the insulated conductor outwardly past either face and the housing.

The present invention enables wire insertion or loading from opposing ends of a pivotal stuffer member, and provision for a separate sealant means that can be incorporated into the device. The manner by which this may be achieved will become apparent from the specification which follows, particularly when read in conjunction with the accompanying drawings.

Embodiments of the present invention will now be described by way of example with reference to the accompanying drawings, in which:
FIGURE 1 is a bottom perspective view of an exemplary four position power tap network connector according to this invention, where the two left modules illustrate a terminated position, less wires, the right module represents the wire receiving or unterminated position, and the intermediate module shows the components thereof in an exploded position;
FIGURE 2 is a perspective view of the pivotal stuffer member for mounting in the connector housing;
FIGURE 3 is a top perspective view of the connector housing of a typical four position power tap network connector according to this invention;
FIGURE 4 is a bottom perspective view of the connector housing of FIGURE 3;
FIGURE 5 and 6, respectively, are top and bottom perspective views showing a pair of insulated conductors positioned for IDC termination therewithin;
FIGURE 7 is a sectional view taken longitudinally through the wired module of Figures 5 and 6;
FIGURE 8 is a sectional view, similar to FIGURE 7, showing the IDC terminated position;
FIGURE 9 is a top view of the four position power tap connector of this invention, modified with a gel sealant chamber adjacent the rear end thereof;
FIGURE 10 is a rear perspective view of a second embodiment of the invention, where such embodiment is directed to a single position connector;
FIGURE 11 is a front perspective view of the embodiment of FIGURE 10;
FIGURE 12 is a bottom perspective view of the single position embodiment of FIGURES 10 and 11;
FIGURE 13 is a front view of the second embodiment showing a preferred mounting procedure;
FIGURE 14 is a perspective view of an alternative type of terminal that may be used herein, particularly for the single position second embodiment;
FIGURE 15 is a cross sectional view of an alternative embodiment of the wire carrier; and
FIGURE 16 is a perspective view of the alternative embodiment of the wire carrier.

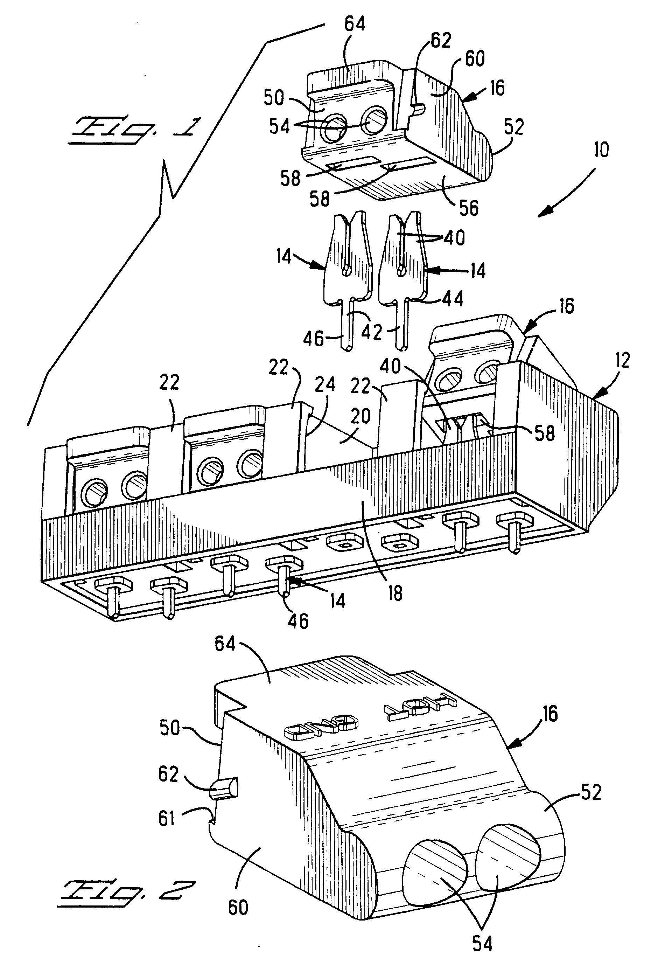

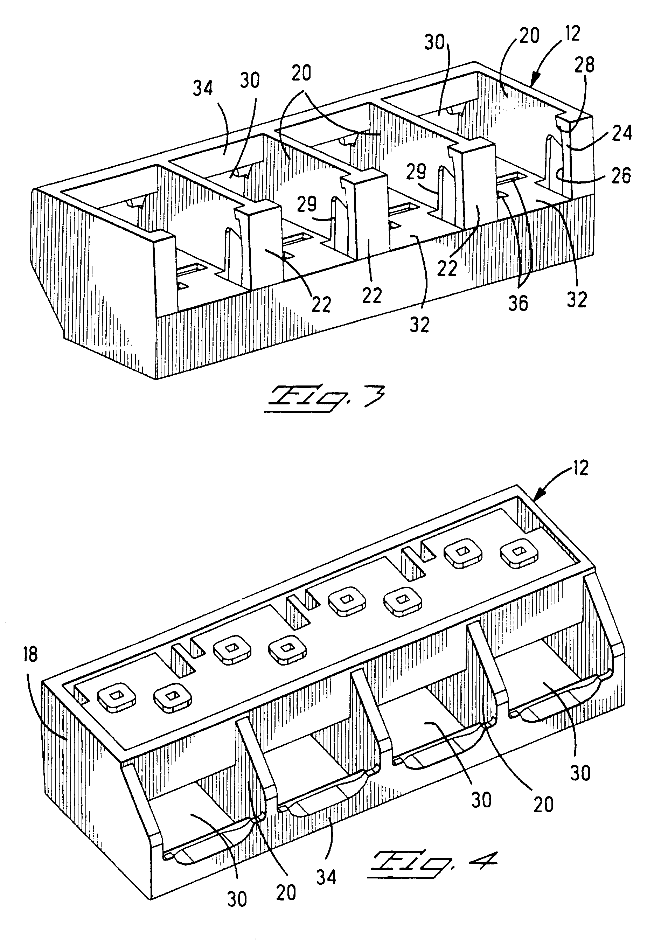

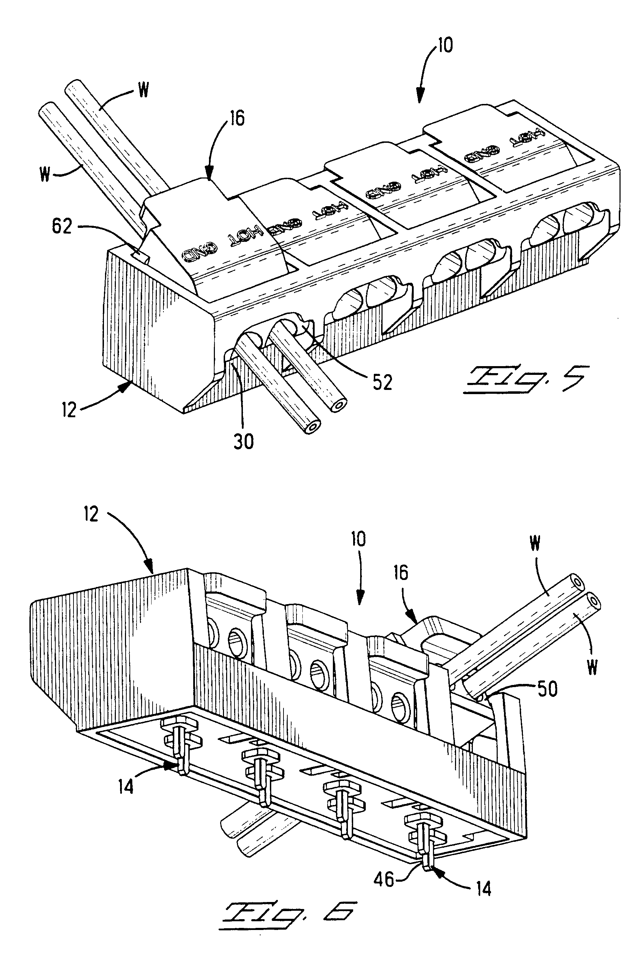

The present invention relates to a field terminated, power tap network connector 10, the elements thereof being illustrated in a first embodiment in Figure 1. The connector 10 comprises a modular housing 12, with each modular unit thereof adapted to receive a pair of IDC terminals 14, and a wire carrier 16 arranged for pivotal movement on the housing 12.

The modular housing 12, where four units are illustrated in the top and bottom perspective views of Figures 3 and 4, respectively, comprises a base 18 having upstanding end or intermediate walls 20 to separate the respective modular units. The modular housing further includes a segmented front wall 22 (Figures 1 and 3), where such wall segments terminate the respective intermediate or end walls 20. Such segmented front walls 22 include an inwardly facing shoulder 24 having an arcuate face 26 which ends in a stop 28 and which, as will be apparent in the later description, defines the pivotal arc or path of movement for the pivotally mounted wire carrier 16. Further, the_ respective walls 20, adjacent the shoulder 24, include a recess 29 to receive a cam guide, as described hereinafter, on the sides of the pivotal wire carrier.

The rear of the housing 12, as best seen in Figures 3, 4, 5 and 7 includes an opening 30, where such opening is defined by the respective walls 20, floor 32 of base 18, and a rear wall segment 34 which acts as a complementary pivot member. The significance of the opening 30 will become apparent hereinafter. Finally, the housing 12, through its base 18, is provided with plural terminal slots 36 for receipt of the IDC terminal 14 shown in Figure 1.

The IDC terminal, illustrated as poised for entry into the housing base 18 in Figure 1, consists of a stamped metal contact having a pair of IDC split beam legs 40, a solder tail 42, and a shoulder 44 defining the two portions. In the assembly of the connector, with the plane of the legs longitudinally arranged, the solder tail 42 is press fit into and seated within a respective slot 36, with the ends 46 projecting below the base. In this position the housing may be mounted on a suitable planar electronic device, such as a printed circuit board, and the terminal ends 46 soldered to appropriate circuit carrying plated through holes in the device.

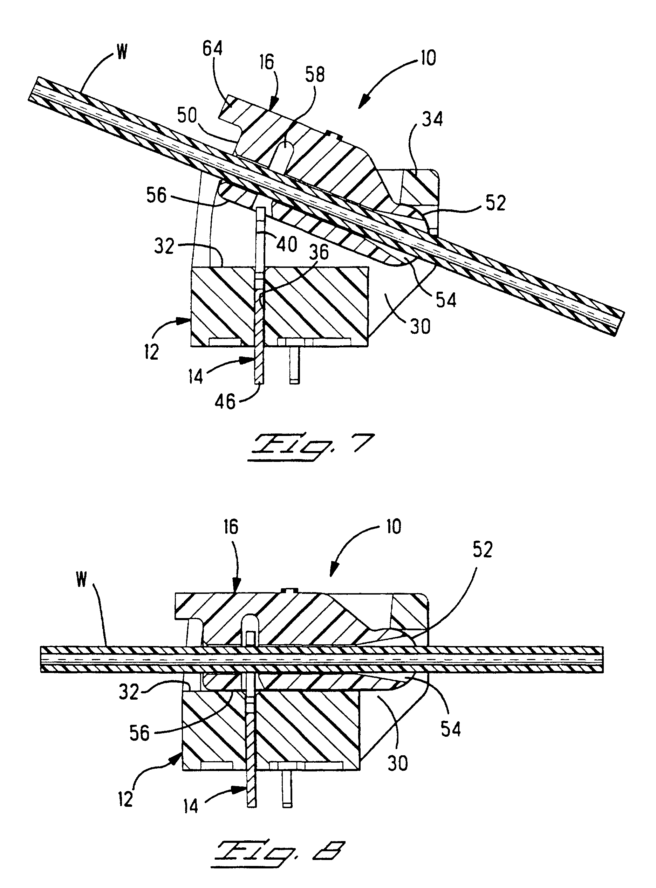

The wire carrier 16, illustrated in the isolated position in Figures 1 and 2, comprises a body portion having an essentially flat front face 50, a curved rear face 52 which acts as a pivot member, and a pair of through openings 54, extending between the respective faces, for receiving a pair of wires, i.e. power and ground or tip and ring, for example. Communicating with said openings 54, through the bottom wall 56 thereof, are a pair of slots 58, typically offset from one another, for receiving the split beam legs 40 during termination of the subscriber wires, see Figure 1. To effect pivoting or arcuate movement of wire carrier 16, the rear face 52 is made semicylindrical and sized to pivotally move within the opening 30 under the rear wall segment 34. Toward the front face 50, along each side 60, a cam follower 62 is provided to seat within the recess 29 during the pivoting movement of the wire carrier 16. Finally, the wire carrier may be provided with a forward flanged portion 64 to facilitate movement, particularly during untermination of the system, of the wire carrier 16.

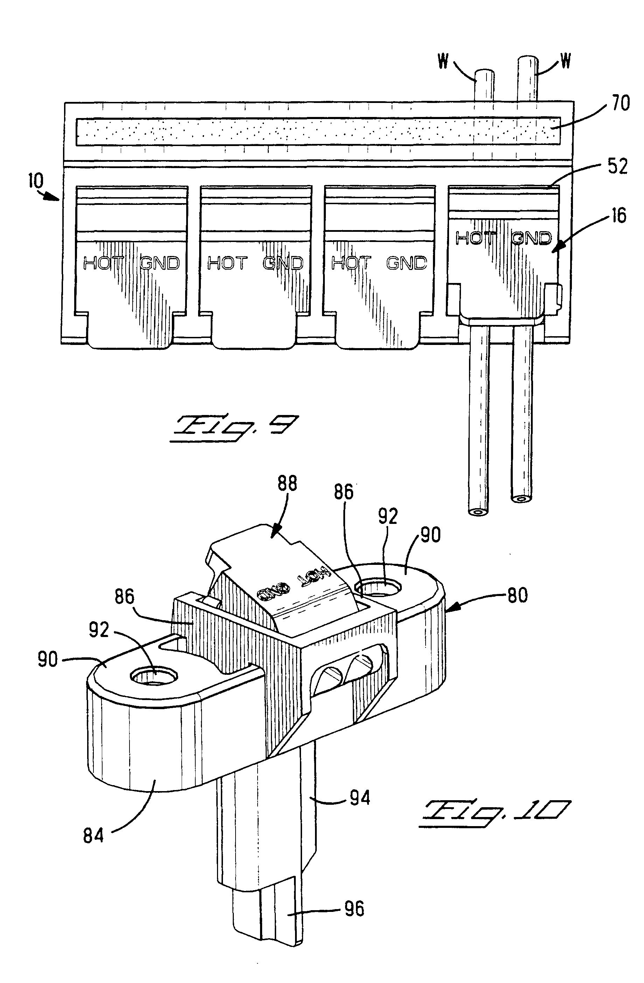

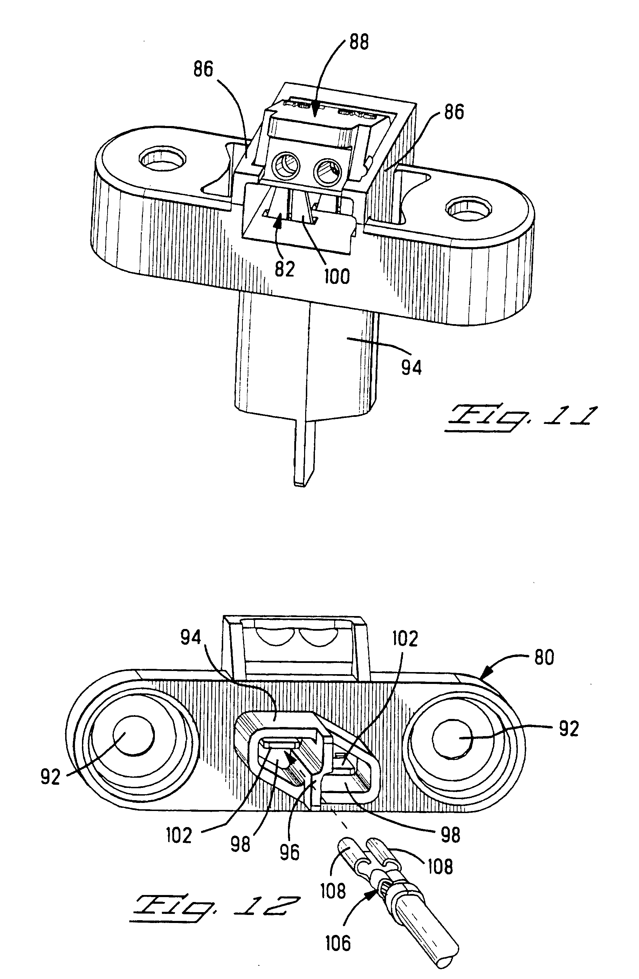

Figures 5 to 8 illustrate a unique feature of this invention, namely the accessibility of loading the power and ground wires or the tip and ring wires "W", or some other type of premise wiring, for example, from either the front face 50 or rear face 52. Figures 7 and 8 show sequentially the termination of the wires "W". Figure 7 shows the wire carrier 16 in the first or wire insertion position in which the wires may be loaded into the wire carrier. Once the wires are loaded into the wire carrier 16, with the slots 58 overriding the respective legs 40 of the IDC terminals 14, the wire carrier 16 is pivoted downwardly such that the bottom wall 56 thereof rests against the housing floor 32. This is the second or wire termination position. As this movement takes place, the wires "W" are stuffed between the respective legs 40 where the insulation of the wire is displaced and the core thereof electrically contacts the walls between such legs. Simply moving or pivoting the wire carrier 16 upwardly will effect untermination of the wires "W".

When the wire carrier 16 is in the unterminated position, the cam guide 62 is above the walls 20 and provides resistance against downward movement of the wire carrier. A front shoulder 61 of the wire carrier (see Figure 2) abuts against the stop 28 thereby preventing the wire carrier from being rotated into a more vertical position. When the wire carrier 16 is pushed into the terminated position, the cam guide 62 is pushed down until it resides within the recess 29 thereby securing the wire carrier in the terminated position. The cam guide 62 provides enough resistance to the wire carrier to keep it in the desired position. However, it allows the wire carrier to be easily moved by the operator using only his hands.

The power tap connector illustrated is specifically designed to provide a connection for the power conductors on a coax cable. The signal and power from the coax cable are split in a tap utility box on the utility pole and they are separately sent to the customer's home to provide both the signal to the home and also the power to operate the customer's box. The power from the coax cable is directed through the circuit board upon which the power tap connector is mounted and connected to the solder tails 42. Since the tap box is mounted on a utility pole, it must be protected from the weather. In order to accomplish this, it is necessary to seal the exit points for the power wires.

One of the advantages of this dual loading system of the present invention is illustrated in Figure 9. Here, a reservoir 70, containing a semi-fluid, self-healing gel, such as a hydrocarbon based sealant, may be incorporated. Figure 9 represents the tap box. The reservoir 70 is in the wall of the tap box through which the power wires will extend. The power tap connector will be mounted on the inside of the box along an outer wall of the box and the wires will extend through the walls and through the reservoir 70. A gel suitable for practicing this invention is described in U.S. Patent No. 5,360,350. The nature of this type of gel allows loading of the wires "W" initially through the gel, then into the wire carrier 16 through the rear face 52. By placing the gel reservoir 70 adjacent the pivoting rear face 52, there is little disturbance about the wires "W" and the self-healing nature of the gel maintains an effective seal thereabout. Were the reservoir placed adjacent the opposite end of the wire carrier, one can see that the gel would be disturbed significantly during termination and untermination thereby effecting its ability to seal the wires.

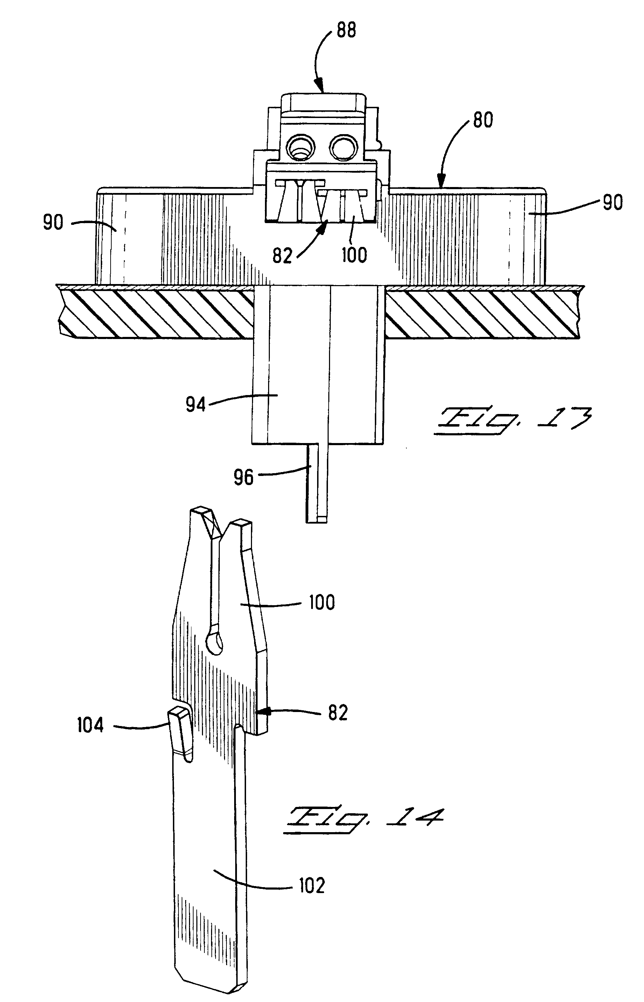

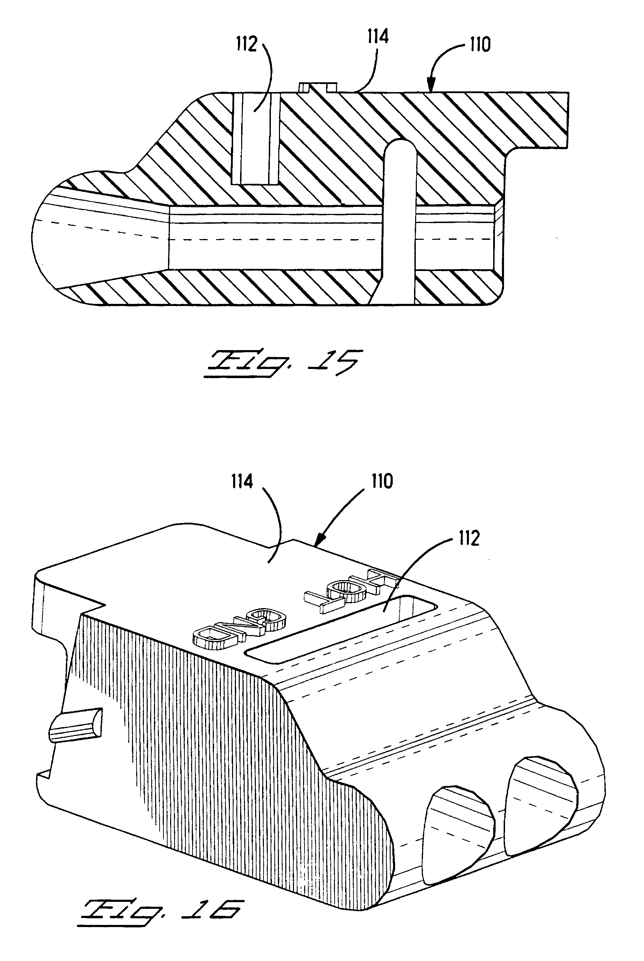

Figures 10 to 14 illustrate a second embodiment, which is distinguishable from the earlier embodiment by the use of a single power tap connector 80, and by the use of a modified IDC type terminal 82, see Figure 14. Specifically, the single power tap connector 80 includes a housing 84 having a pair of spaced apart transverse walls 86 between which is a pivotally mounted wire carrier 88, constructed in a manner described above. The housing 84 further includes lateral extensions 90, with through holes 92 therein, for mounting to an underlying board or panel, for example, see Figure 13. Extending below the housing is a contact receiving extension 94, where such extension includes a cavity dividing wall 96. Note in Figure 12, an underside perspective view, that a pair of contact receiving cavities 98 are found.

The preferred type of male terminal 82 to be used herein is illustrated in Figure 14. Such male terminal 82 includes an IDC slotted beam 100 at one end thereof, and a flat bladed end 102. For securing same into the housing 84, a lance 104 may be struck therefrom for latching engagement in the housing. A typical female or complementary contact 106 is illustrated in Figure 12. Briefly, the contact 106 includes a pair of inwardly turned arms 108 for engagement with the bladed end 102. For a more detailed discussion of such complementary contacts, reference is made to our U.S. Patent No. 2,774,951.

This single power tap connector offers the same unique advantages as noted above, that is, the wire carrier 88 may be loaded from either the front face, or the rear pivoting face. The single power tap connector is typically mounted in the customer's home to provide the connection of the power wires from the utility tap box which is mounted on the utility pole.

Figure 15 and 16 show an alternative embodiment of wire carrier 110. The wire carrier 110 is similar to wire carrier 16 in all respects except that the wire carrier 110 has a tool assist slot 112 along the upper surface 114 which extends downwardly from the top surface 114. The tool assist slot is designed to receive the head of a screw driver or a similar tool and is used to assist in the termination and untermination of the wires "W". Even though the wire carrier 110 is designed to be operated without the use of tools, there may be circumstances in which it may be necessary or helpful to use a tool to rotate the wire carrier. The head of a tool is inserted into the tool assist slot 112 and used as a lever to rotate the wire carrier either upward or downward and thereby terminate or unterminate the wires "W".

The advantages of the present invention are that the power tap connector can be mounted in such a manner that the tap box can be sealed from the elements. Further, the power tap connector allows the wires to be terminated and unterminated without the use of tools.

Further, the power tap connector has been specifically described for electrically connecting power wires, but it can be equally applicable for connecting signal wires of the telephone system such as tip and ring lines.

## Claims

1. A wire termination arrangement for a connector module (10) having terminals (14) secured within a module housing (12), comprising at least one wire carrier (16) having at least one wire-receiving passageway (54) extending thereinto from an exposed front face (50), a rearward end (52) including a pivot section adapted to cooperate with a complementary pivot section of said module housing (12) to move said wire carrier (16) from a first or wire insertion position to a second or wire termination position, and at least one slot (58) extending into a housing-adjacent face (56) to receive a wire insulation displacement terminal (14), said slot (58) intersecting said wire-receiving passageway (54), characterized in that:
said wire-receiving passageway (54) defines a continuous open passageway between opposite faces (50,52) and an outer periphery of said housing (12) in the second or wire termination position,
whereby with a distal end of a conductor of a premise wire inserted along a respective said wire-receiving passageway (54) and being selectively extendable outwardly past said rear face (52) and said module housing (12), said wire carrier (16) is movable from said first wire-termination slot (54) of said insulation displacement terminal thus terminating said conductor.

2. A power tap connector (10) for terminating a pair of conductors by insulation displacement, the connector (10) including a housing (12) for receiving at least a pair of upstanding IDC terminals (14), and a pivotally mounted wire carrier (16) arranged on said housing (12) and having front and rear faces (50,52), a conductor receiving opening (54) for each IDC terminal, and an IDC terminal receiving slot (58) in communication with each opening (54), said wire carrier (16) being pivotal from a first or conductor unterminated position to a second or conductor terminated position, characterized in that:
the conductor receiving openings (54) extend from the front face (50) to the rear face (52) of the wire carrier (16) and define continuous open passageways between the front and rear faces (50,52) and an outer periphery of the housing (12) in the second or conductor terminated position,
whereby an insulated conductor may be positioned for termination to a corresponding IDC terminal (14) within the opening (54) by entry thereinto through either said front face (50) or said rear face (52) for selectively extending the insulated conductor outwardly past either face (50,52) and the housing (12).

3. The power tap connector (10) of claim 2, wherein the wire carrier (16) has a curved rearward face (52) which acts as a pivot member about which the wire carrier (16) rotates.

4. The power tap connector (10) of claim 2 or 3, wherein the housing (12) has walls (20) which form an area receiving the wire carrier (16), the wire carrier (16) being received within the housing (12) between opposing walls (20).

5. The power tap connector (10) of claim 4, wherein the wire carrier (16) has a cam follower (62) disposed along a sidewall (60) thereof, the walls (20) having a recess (29) adjacent the area for receiving the wire carrier, and the cam follower (62) cooperating with the recess (28) and the walls (20) to support the wire carrier (16) in the unterminated position and the terminated position.

6. The power tap connector (10) of claim 5, wherein the wire carrier (16) has a front shoulder (61) and the walls (20) have a stop (28), the front shoulder (61) engaging the stop (28) when the wire carrier (16) is in the unterminated position to prevent the wire carrier (16) from being rotated further upwardly.

7. The power tap connector (10) of any preceding claim 2 to 6, wherein the IDC terminals (14) have split beam legs (40) for receiving the insulated conductors therebetween, and solder tails (42) for providing termination to a circuit board.

8. The power tap connector (10) of claim 7, wherein each IDC terminal (14) is secured within the housing (12) and the solder tail (42) extends below a bottom of the housing (12), the split beam legs (40) extending into an area for receiving the wire carrier (16) and into the slots (58) within the wire carrier (16).

9. The power tap connector (10) of any preceding claim 2 to 8, wherein the housing (12) has a rear wall segment and an opening (30) along a rear portion of the housing, and the rear wall segment cooperates with the rear face (52) of the wire carrier (16) to allow the wire carrier (16) to pivot, the opening (30) being aligned with the conductor receiving openings (54), whereby an insulated conductor is receivable through the opening (30) into a conductor receiving opening (54).

10. The power tap connector (10) of any preceding claim 2 to 9, wherein the wire carrier (16) has a tool slot (112) extending from a top surface (114) thereof, the tool slot (112) receiving a tool for assisting in rotating the wire carrier (16) from the terminated position to the unterminated position or from the unterminated position to the terminated position.

11. The power tap connector (10) of claim 7 or 8, wherein the solder tails of the IDC terminals (14) are flat bladed ends (102) which act as tab contacts for electrical connection with matable contacts.

12. The power tap connector (10) of claim 11, wherein a contact receiving extension extends from the housing from a side opposite to the wire carrier, the flat bladed ends (102) being received within the contact receiving extension.

13. The power tap connector (10) of claim 11 or 12, wherein the housing (12) has lateral extensions (90) with mounting holes (92) therein for securing the housing (12) to a panel.

14. The power tap connector (10) of claim 4, or any preceding claim appendant to claim 4, wherein the housing has several walls (20) defining a plurality of the areas (30) for receiving the wire carriers (16), and a plurality of the wire carriers (16) are disposed within said areas (30).

## Patentansprüche

1. Drahtabschlußanordnung für ein Verbindermodul (10) mit in einem Modulgehäuse (12) befestigten Anschlüssen (14), umfassend: mindestens einen Drahtträger (16) mit mindestens einem Drahtaufnahmedurchgang (54), der sich von einer freiliegenden Vorderfläche (50) dort hinein erstreckt, wobei ein hinteres Ende (52) einen Drehabschnitt, der mit einem komplementären Drehabschnitt des Modulgehäuses (12) zusammenwirken kann, um den Drahtträger (16) aus einer ersten oder Drahteinführungsposition in eine zweite oder Drahtabschlußposition zu bewegen, enthält, und mindestens einen sich in eine dem Gehäuse benachbarte Fläche (56) erstreckenden Schlitz (58) zum Aufnehmen eines Drahtschneidklemmanschlusses (14), wobei der Schlitz (58) den Drahtaufnahmedurchgang (54) schneidet, dadurch gekennzeichnet, daß:
der Drahtaufnahmedurchgang (54) in der zweiten oder Drahtabschlußposition einen durchgehenden offenen Durchgang zwischen gegenüberliegenden Flächen (50, 52) und einem Außenumfang des Gehäuses (12) definiert,
wodurch, wenn ein distales Ende eines Leiters einer Teilnehmerleitung entlang einem jeweiligen Drahtaufnahmedurchgang (54) eingeführt ist und gezielt nach außen an der hinteren Fläche (52) und dem Modulgehäuse (12) vorbei verlängert werden kann, der Drahtträger (16) von dem ersten Drahtabschlußschlitz (54) des Schneidklemmkontaktes wegbewegt werden kann, wodurch der Leiter abgeschlossen wird.

2. Stromabgriffsverbinder (10) zum Abschließen eines Paars von Leitern durch Schneidklemmen, wobei der Verbinder (10) ein Gehäuse (12) zum Aufnehmen mindestens eines Paars von hochstehenden Schneidklemmanschlüssen (14) und einen drehbar angebrachten Drahtträger (16) enthält, der an dem Gehäuse (12) angeordnet ist und eine vordere Fläche (50) und eine hintere Fläche (52), eine Leiteraufnahmeöffnung (54) für jeden Schneidklemmanschluß und einen mit jeder Öffnung (54) in Verbindung stehenden Schneidklemmanschlußaufnahmeschlitz (58) aufweist, wobei der Drahtträger (16) aus einer ersten oder Leiternichtabschlußposition in eine zweite oder Leiterabschlußposition gedreht werden kann, dadurch gekennzeichnet, daß:
sich die Leiteraufnahmeöffnungen (54) von der vorderen Fläche (50) zu der hinteren Fläche (52) des Drahtträgers (16) erstrecken und durchgehende offene Durchgänge zwischen der vorderen Fläche (50) und der hinteren Fläche (52) und einem Außenumfang des Gehäuses (12) in der zweiten oder Leiterabschlußposition definieren,
wodurch ein isolierter Leiter positioniert werden kann, um an einem entsprechenden Schneidklemmanschluß (14) in der Öffnung (54) durch Eintritt dort hinein entweder durch die vordere Fläche (50) oder die hintere Fläche (52) zur gezielten Verlängerung des isolierten Leiters nach außen an einer der Flächen (50, 52) und dem Gehäuse (12) vorbei abgeschlossen zu werden.

3. Stromabgriffsverbinder (10) nach Anspruch 2, bei dem der Drahtträger (16) eine gekrümmte nach hinten weisende Fläche (52) aufweist, die als Drehglied wirkt, um das sich der Drahtträger (16) dreht.

4. Stromabgriffsverbinder (10) nach Anspruch 2 oder 3, bei dem das Gehäuse (12) Wände (20) aufweist, die einen den Drahtträger (16) aufnehmenden Bereich bilden, wobei der Drahtträger (16) in dem Gehäuse (12) zwischen gegenüberliegenden Wänden (20) aufgenommen wird.

5. Stromabgriffsverbinder (10) nach Anspruch 4, bei dem der Drahtträger (16) einen entlang einer Seitenwand (60) davon angeordneten Steuernocken (62) aufweist, wobei die Wände (20) neben dem Bereich zum Aufnehmen des Drahtträgers eine Ausnehmung (29) aufweisen und der Steuernocken (62) mit der Ausnehmung (28) und den Wänden (20) zusammenwirkt, um den Drahtträger (16) in der Nichtabschlußposition und der Abschlußposition zu stützen.

6. Stromabgriffsverbinder (10) nach Anspruch 5, bei dem der Drahtträger (16) eine vordere Schulter (61) und die Wände (20) einen Anschlag (28) aufweisen, wobei die vordere Schulter (61) den Anschlag (28) in Eingriff nimmt, wenn sich der Drahtträger (16) in der Nichtabschlußposition befindet, um zu verhindern, daß der Drahtträger (16) weiter nach oben gedreht wird.

7. Stromabgriffsverbinder (10) nach einem der vorhergehenden Ansprüche 2 bis 6, wobei die Schneidklemmanschlüsse (14) Schenkel (40) mit geteiltem Balken zum Aufnehmen der isolierten Leiter dazwischen und Lötfahnen (42) zum Bereitstellen eines Abschlusses an einer Leiterplatte aufweisen.

8. Stromabgriffsverbinder (10) nach Anspruch 7, bei dem jeder Schneidklemmanschluß (14) in dem Gehäuse (12) befestigt ist und sich die Lötfahne (42) unter einem Boden des Gehäuses (12) erstreckt, wobei sich die Schenkel (40) mit geteiltem Balken in einen Bereich zum Aufnehmen des Drahtträgers (16) und in die Schlitze (58) in dem Drahtträger (16) erstrecken.

9. Stromabgriffsverbinder (10) nach einem der vorhergehenden Ansprüche 2 bis 8, bei dem das Gehäuse (12) ein Hinterwandsegment und eine Öffnung (30) entlang einem hinteren Teil des Gehäuses aufweist und das Hinterwandsegment mit der hinteren Fläche (52) des Drahtträgers (16) zusammenwirkt, damit sich der Drahtträger (16) drehen kann, wobei die Öffnung (30) auf die Leiteraufnahmeöffnungen (54) ausgerichtet ist, wodurch ein isolierter Leiter durch die Öffnung (30) in eine Leiteraufnahmeöffnung (54) aufgenommen werden kann.

10. Stromabgriffsverbinder (10) nach einem der vorhergehenden Ansprüche 2 bis 9, bei dem der Drahtträger (16) einen sich von einer oberen Oberfläche (114) davon erstreckenden Werkzeugschlitz (112) aufweist, wobei der Werkzeugschlitz (112) ein Werkzeug zum Unterstützen des Drehens des Drahtträgers (16) aus der Abschlußposition in die Nichtabschlußposition oder aus der Nichtabschlußposition in die Abschlußposition aufnimmt.

11. Stromabgriffsverbinder (10) nach Anspruch 7 oder 8, bei dem die Lötfahnen der Schneidklemmanschlüsse (14) Enden (102) in Form von flachen Messern sind, die als Flachstecker zur elektrischen Verbindung mit entsprechenden Kontakten fungieren.

12. Stromabgriffsverbinder (10) nach Anspruch 11, bei dem sich eine Kontaktaufnahmeerweiterung von dem Gehäuse von einer dem Drahtträger aus gegenüberliegenden Seite aus erstreckt, wobei die Enden (102) in Form von flachen Messern in der Kontaktaufnahmeerweiterung aufgenommenen werden.

13. Stromabgriffsverbinder (10) nach Anspruch 11 oder 12, bei dem das Gehäuse (12) seitliche Erweiterungen (90) mit Installationslöchern (92) darin zum Befestigen des Gehäuses (12) an einer Tafel aufweist.

14. Stromabgriffsverbinder (10) nach Anspruch 4 oder irgend einem der vorhergehenden, Anspruch 4 zugehörigen Ansprüche, bei dem das Gehäuse mehrere Wände (20) aufweist, die mehrere der Bereiche (30) zum Aufnehmen der Drahtträger (16) definieren, und mehrere der Drahtträger (16) in den Bereichen (30) angeordnet sind.

## Revendications

1. Montage de connexion de fils pour un module connecteur (10) présentant des bornes (14) fixées à l'intérieur d'un boîtier (12) de module, comprenant au moins un porte-fil (16) présentant au moins un passage (54) de réception de fil se prolongeant dans celui-ci depuis une face avant exposée (50), une extrémité arrière (52) comportant une section pivot adaptée pour coopérer avec une section de pivot complémentaire dudit boîtier (12) de module afin de déplacer ledit porte-fil (16) d'une première position, ou position d'insertion de fil, à une deuxième position, ou position de connexion de fil, et au moins une fente (58) se prolongeant jusque dans une face (56) adjacente au boîtier afin de recevoir une borne autodénudante (14), ladite fente (58) coupant ledit passage (54) de réception de fil, caractérisé en ce que :
ledit passage (54) de réception de fil définit un passage ouvert continu entre des faces opposées (50, 52) et une périphérie extérieure dudit boîtier (12) dans la deuxième position, ou position de connexion de fil,
de sorte qu'avec une extrémité distale d'un conducteur d'un fil de local inséré le long d'un dit passage (54) de réception de fil respectif et capable de se prolonger sélectivement vers l'extérieur au-delà de ladite face arrière (52) et dudit boîtier (12) de module, ledit porte-fil (16) peut être déplacé depuis ladite première fente (54) de connexion de fil de ladite borne autodénudante, en connectant ainsi ledit conducteur.

2. Connecteur (10) de prise de courant pour terminer une paire de conducteurs par autodénudage, le connecteur (10) comportant un boîtier (12) pour recevoir au moins une paire de bornes autodénudantes (14) s'élevant à la verticale, et un porte-fil (16) monté pivotant, agencé sur ledit boîtier (12) et présentant des faces avant et arrière (50, 52), une ouverture (54) de réception de conducteur pour chaque borne autodénudante, et une fente (58) de réception de borne autodénudante en communication avec chaque ouverture (54), ledit porte-fil (16) pouvant pivoter d'une première position, ou position non connectée à une deuxième position, ou position connectée du conducteur, caractérisé en ce que :
les ouvertures (54) de réception de conducteur se prolongent depuis la face avant (50) jusqu'à la face arrière (52) du porte-fil (16) et définissent des passages ouverts continus entre les faces avant et arrière (50, 52) et une périphérie extérieure du boîtier (12) dans la deuxième position ou position connectée du conducteur,
de sorte qu'un conducteur isolé puisse être positionné en vue de sa connexion sur une borne autodénudante (14) correspondante à l'intérieur de l'ouverture (54) en pénétrant dans celle-ci par ladite face avant (50) ou ladite face arrière (52) pour faire se prolonger sélectivement le conducteur isolé vers l'extérieur, au-delà des deux faces (50, 52) et du boîtier (12).

3. Connecteur (10) de prise de courant selon la revendication 2, dans lequel le porte-fil (16) présente une face arrière incurvée (52) jouant le rôle d'élément pivot autour duquel le porte-fil (16) tourne.

4. Connecteur de prise de courant (10) selon la revendication 2 ou 3, dans lequel le boîtier (12) présente des parois (20) formant une zone de réception du porte-fil (16), celui-ci étant reçu dans le boîtier (12) entre des parois (20) opposées.

5. Connecteur (10) de prise de courant selon la revendication 4, dans lequel le porte-fil (16) présente un galet de came (62) disposé le long d'une paroi latérale (60) de celui-ci, les parois (20) présentant un renfoncement (29) adjacent à la zone de réception du porte-fil, et le galet de came (62) coopérant avec le renfoncement (28) et les parois (20) pour supporter le porte-fil (16) dans la position non connectée et la position connectée.

6. Connecteur (10) de prise de courant selon la revendication 5, dans lequel le porte-fil (16) présente un épaulement avant (61) et les parois (20) présentent une butée (28), l'épaulement avant (61) engageant la butée (28) lorsque le porte-fil (16) occupe la position non connectée afin d'empêcher le porte-fil (16) de tourner davantage vers le haut.

7. Connecteur (10) de prise de courant selon l'une quelconque des revendications 2 à 6, dans lequel les bornes autodénudantes (14) présentent des pattes fendues (40) pour recevoir entre elles les conducteurs isolés, et des queues à souder (42) pour réaliser une connexion sur une carte à circuit imprimé.

8. Connecteur (10) de prise de courant selon la revendication 7, dans lequel chaque borne autodénudante (14) est fixée dans le boîtier (12) et la queue à souder (42) se prolonge en dessous d'une base du boîtier (12), les pattes fendues (40) se prolongeant jusque dans une zone de réception du porte-fil (16) et dans les fentes (58) dans le porte-fil (16).

9. Connecteur (10) de prise de courant selon l'une quelconque des revendications 2 à 8, dans lequel le boîtier (12) présente un segment de paroi arrière et une ouverture (30) le long d'une portion arrière du boîtier, et le segment de paroi arrière coopère avec la face arrière (52) du porte-fil (16) pour permettre au porte-fil (16) de pivoter, l'ouverture (30) étant alignée avec les ouvertures (54) de réception de conducteur, de sorte qu'un conducteur isolé puisse être reçu dans l'ouverture (30) jusque dans l'ouverture (54) de réception de conducteur.

10. Connecteur (10) de prise de courant selon l'une quelconque des revendications 2 à 9, dans lequel le porte-fil (16) présente une fente (112) à outil se prolongeant depuis une surface supérieure (114) de celui-ci, la fente (112) à outil recevant un outil destiné à faciliter la rotation du porte-fil (16) de la position connectée vers la position non connectée ou de la position non connectée vers la position connectée.

11. Connecteur (10) de prise de courant selon la revendication 7 ou 8, dans lequel les queues à souder des bornes autodénudantes (14) sont des extrémités à lame plate (102) jouant le rôle de contacts à languette en vue d'une connexion électrique avec des contacts d'accouplement.

12. Connecteur (10) de prise de courant selon la revendication 11, dans lequel un prolongement de réception de contact se prolonge depuis le boîtier, depuis un côté opposé du porte-fil, les extrémités à lame plate (102) étant reçues dans le prolongement de réception de contact.

13. Connecteur (10) de prise de courant selon la revendication 11 ou 12, dans lequel le boîtier (12) présente plusieurs prolongements latéraux (90) dans lesquels sont ménagés des trous de montage (92) pour fixer le boîtier (12) sur un panneau.

14. Connecteur (10) de prise de courant selon la revendication 4, ou l'une quelconque des revendications précédentes dépendant de la revendication 4, dans lequel le boîtier présente plusieurs parois (20) définissant une pluralité de zones (30) pour recevoir les porte-fil (16) et une pluralité de porte-fil (16) sont disposés dans lesdites zones (30).
